# EUROPEAN PATENT APPLICATION

(11) **EP 0 538 921 A2**
(43) Date of publication of application: **28.04.1993**
(21) Application number: 92202926.9
(22) Date of filing: 23.09.1992
(51) Int. Cl.: A01C 23/02, A01C 23/00

(54) **Filter for liquid manure**

(30) Priority: 24.09.1991 NL 9101612; 03.10.1991 NL 9101667
(71) Applicant: PEETERS LANDBOUWMACHINES B.V., NL-4885 JH Achtmaal (NL)
(72) Inventor: Peeters, Petrus Cornelius Adrianus, NL-4885 JH Achtmaal (NL); Peeters, Daniel Petrus Marie, NL-4885 JH Achtmaal (NL)
(74) Representative: Eveleens Maarse, Pieter

(57) **Abstract**

The present invention relates to a filter for filtering liquid manure, wherein the filter is formed by a cylindrical housing (35), wherein a feed channel (39) debouches into one of the end walls (38), the round cylindrical wall (35) is perforated and that a drain channel (40) is present extending around the cylindrical wall (35).

Such a filter prevents blockage.

The filter can be used in a turf layer manuring apparatus or a liquid manure injector.

## Description

The present invention relates to a filter for filtering liquid manure.

Such filters are often applied in liquid manure injectors which, depending on the field of application, are also known as turf layer manuring apparatus or turf layer injectors.

In such an apparatus the liquid manure is delivered via injection devices into the ground to prevent the manure being distributed on the surface of the land for manuring and there causing environmental damage.

Such injection devices usually comprise narrow channels through which the liquid manure is pressed. Hard pieces or contaminants are often present in the manure, whereby blockage of these narrow channels can occur.

In order to prevent blockage it is known to use filters prior to the manure being fed to the injection device. EP-A-0322941 for instance discloses such a filter. This filter is formed by a drum rotating in a housing, wherein the liquid manure is carried to the cylindrical surface of the housing. When blockages occur, there is the danger of the rotatable drum becoming jammed, and that the blockage is difficult to remove.

The present invention undertakes to prevent the above stated problems.

This object is achieved in that the filter is formed by a cylindrical housing, wherein a feed channel debouches into one of the end walls, in that the round cylindrical wall is perforated and in that a drain channel is present extending around the cylindrical wall.

In preference at least one scraper is arranged in the housing which is drivable in rotation and movable along the inside of the cylindrical wall. This filter can not only be connected between the manure tank and the injection device, in this case between the manure tank and the distributing device, but can also be arranged in the filling conduit of the manure tank. This latter solution generally provides the fewest constructional problems.

The present invention will subsequently be elucidated with reference to the annexed figures, in which:
fig. 1 is a cross sectional view of a filter according to the invention;
fig. 2 is a cross sectional view along the line II-II of the filter depicted in fig. 1;
fig. 3 shows a partly broken away perspective view of an injection device for use with the invention;
fig. 4 shows a partly broken away detailed side view of the device shown in fig. 3; and
fig. 5 is a perspective rear view of a turf layer manuring apparatus wherein devices according to the present invention are applied.

It often occurs that the manure which has to be injected with the device according to the invention is adulterated with pieces of hard material, for instance pieces of wood. Such hard pieces can cause blockage of the injection device. To prevent this a filter is preferably used upstream of the injection devices in the feed line for the liquid manure. This filter can not only be connected between the manure tank and the injection devices, in this case between the manure tank and the distributing device, but the filter can also be arranged in the filling conduit of the manure tank. This latter solution generally provides the fewest design problems. It is however also possible to use the filter in another device, for instance in a feed or discharge conduit of a stationary manure tank.

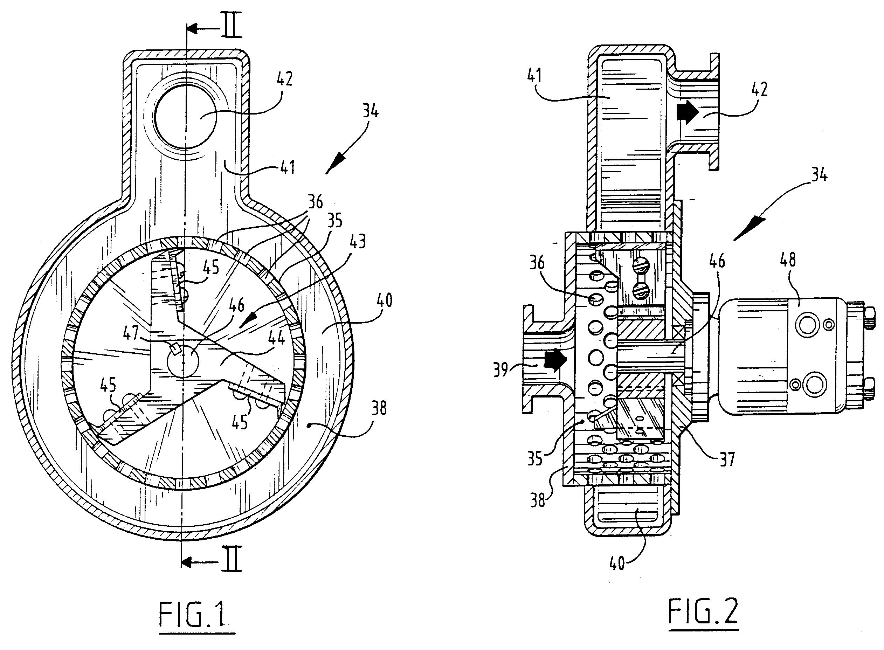

A filter 34 is shown in fig. 1 and 2 in accordance with an embodiment of the invention. It is formed by a cylindrical wall 35 in which are arranged perforations 36. On one side the wall is closed off by a closed end wall 37 and on the other side the cylindrical wall 35 is closed by a closed wall 38 to which is connected a feed pipe 39. Arranged extending around the cylindrical wall is a discharge channel 40 which leads to a widening 41 to which is connected a discharge connecting pipe 42.

When liquid manure is thus supplied via the feed pipe 39 it is subjected to a filtering action by the cylindrical wall 35. The coarser material thus remains behind in the housing so that blockage is prevented.

The problem remains here however that the filter must be emptied at controlled intervals. In order to prevent this problem a rotating scraper member 43 is arranged in the housing which is formed by a star-shaped body 44 onto which three scraping knives 45 are arranged, for instance by means of a screw connection. The scraper member 43 is fixed to a shaft 46 which protrudes through an opening arranged in the wall 37. Attachment to the shaft takes place by means of a key 47. The shaft 46 also forms the output shaft of a hydromotor 48 which drives the shaft 46 and therewith the scraper member 43. The edge of the scraping blade herein moves along the wall 35 so that any possible hard pieces that have been filtered out are cut to pieces and can move through the filter as well as through the injection device without here causing blockage.

Should a blockage nevertheless occur, it is then possible to gain access to the interior of the filter through the removable end wall of the filter in order to remove the blockage.

Such a filter is thus often used on a turf layer manuring apparatus or a liquid manure injector, the construction of which will now be described.

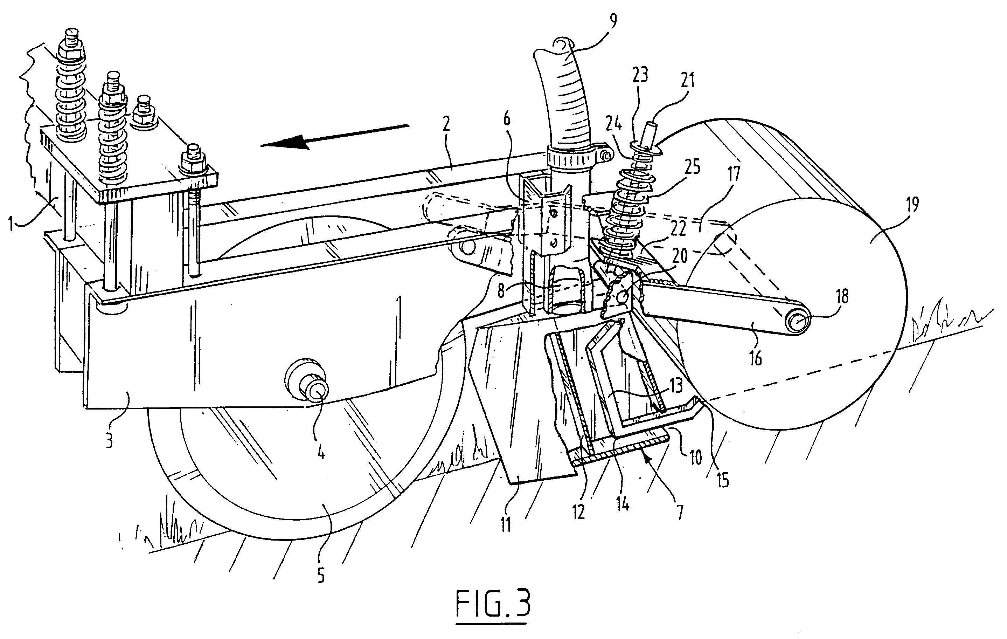

Shown in fig. 3 is a cross beam 1 which is fixed height-adjustably to a turf layer manuring apparatus or to a manure injector. Fixed to the beam 1 is a number of frames which are each formed by two side plates 2, 3. Fixed into both side frames is a shaft 4 onto which is mounted a cutting wheel 5 situated between both side plates 2, 3. At their other ends both side plates 2, 3 are joined by means of a bracket 6. The bracket 6 is fixedly welded to a manure injection housing 7. On its top the manure injection housing 7 is provided with a feed connecting piece 8 to which is connected a manure feed hose 9.

The manure injection housing 7 is further provided with a manure outflow opening 10 arranged at its rear. On its leading side, however, the manure injection housing is provided with a cutting edge 11. The manure injection housing further comprises a dividing wall 12 extending transversely of the direction of movement. The portion of the manure injection housing inside which manure can be located is thus closed off from the portion located more to the front.

A hook 13 is suspended for pivoting with its upper part in the manure injection housing 7. The hook 13 is dimensioned such that it is as broad as the internal breadth of the manure injection housing. This enables closing off the manure feed by pressing the edge 14 of hooks 13 against the transverse wall 12. This latter is possible by exerting a force on the elongated portion 15 of the hook extending through the outflow opening 10.

Fixed rotatably to each of the side plates 2, 3 is a bracket 16, 17 respectively. The free ends of both brackets 16, 17 are connected by means of a shaft 18 onto which is mounted a roller 19.

Both brackets are further connected to each other by means of a shaft 20 to which is fastened a rod 21. Rod 21 extends through an opening arranged in a pressure plate 22 connecting both side plates 2, 3. A stop 23 is arranged on the free end of rod 21. Arranged around the rod 21 between the stop 23 and the pressure plate 22 are two springs 24 and 25.

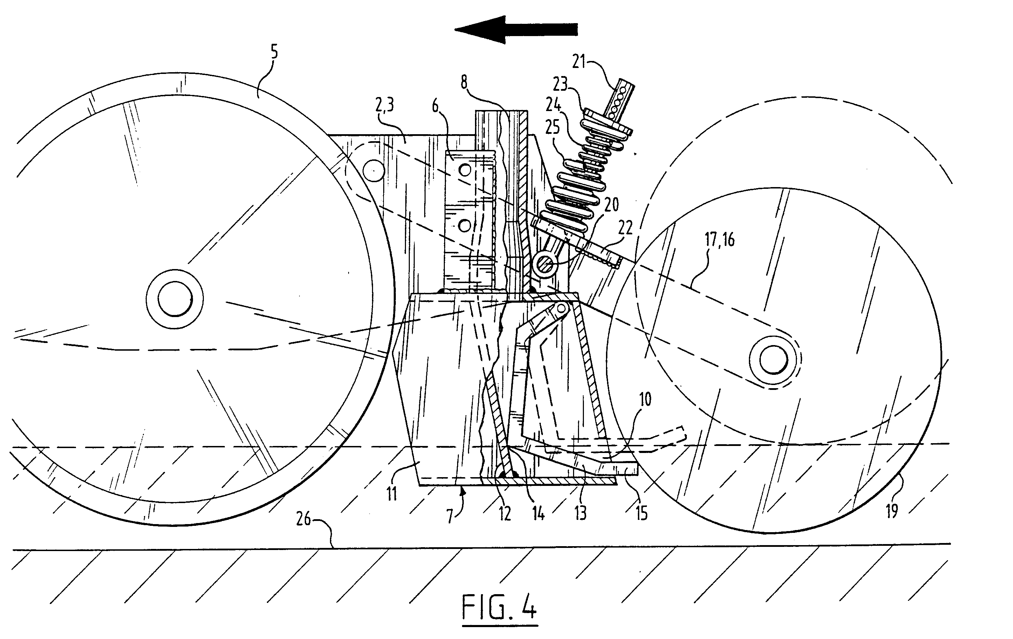

The operation of this apparatus will be further described hereinafter, also with reference to fig. 4. In the situation shown with full lines in fig. 4 the whole apparatus is situated at a distance above the ground surface 26. This means that due to its weight the roller 19 will be situated in its lowest position despite the pressure of the springs 24, 25 which tend to press the roller upward; the roller then applies a force to the tip of the elongated portion 15 of hook 13 whereby the hook 13 is urged to its position in which the edge 14 of hook 13 presses against the transverse wall 12 and interrupts the feed of manure from the connecting piece 8. It thus becomes possible to manoeuvre with the turf layer manuring apparatus, for instance at the end of the land for working.

When manuring is subsequently re-started, the whole apparatus is moved downward and the ground comes, as seen relative to the downward moved apparatus, to the level shown in fig. 4 with dashed lines. The roller 16 is thus subjected to an upward force from the ground surface so that the hook 13 can be moved to its position shown in dashed lines and the passage of the liquid manure from the connecting piece 8 to the outflow opening 10 is free. It is noted here that in the opened situation the final portion of the hook 13 bounds the effective outflow opening at the top, which has a good effect on the distribution of the manure.

The roller 19 otherwise serves to press down again the pieces of turf that have been cut open by the cutting roller 5 and cutting edge 11.

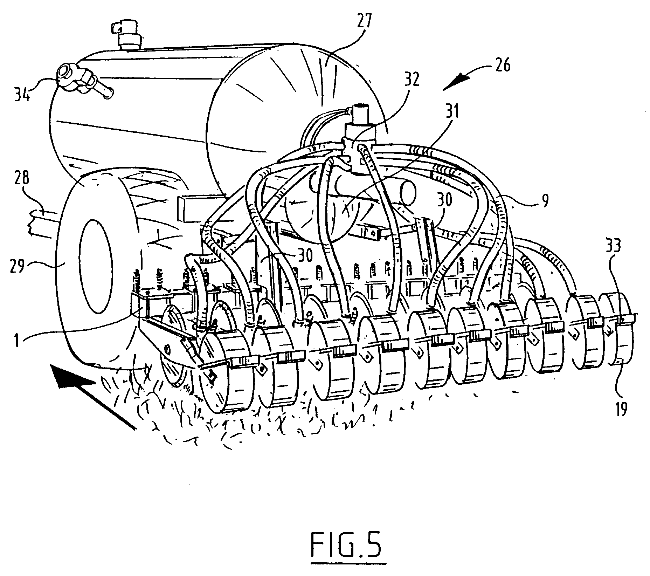

Further shown in fig. 5 is how ten such devices are combined on a cross beam 1, which can be moved in vertical direction relative to a turf layer manuring apparatus 26 by means of a lifting device. The turf layer manuring apparatus 26 comprises a manure tank 27 which rests on a frame 28 to which are fastened wheels 29. The beam 1 is connected to the frame by means of a lifting device 30 shown only schematically.

Behind the tank 27 a pump 31 is arranged on the output connection to which a manure distributor 32 is attached. Hoses 9 lead from the manure distributors to the relevant injection devices.

This drawing otherwise shows how a scraper 33 is arranged on each of the rollers 9.

## Claims

1. Filter for filtering liquid manure, **characterized in that** the filter is formed by a cylindrical housing, wherein a feed channel debouches into one of the end walls, that the round cylindrical wall is perforated and that a drain channel is present extending around the cylindrical wall.

2. Filter as claimed in claim 1, **characterized in that** at least one scraper is arranged in the housing which is drivable in rotation and movable along the inside of the cylindrical wall.

3. Filter as claimed in claim 2**, characterized in that** three scrapers are present which are arranged together on a collective body drivable in rotation.

4. Filter as claimed in claim 1, 2 or 3, **characterized in that** the end wall into which the feed channel debouches is removable.

5. Turf layer manuring apparatus or manure injector provided with a filter as claimed in any of the foregoing claims.

6. Turf layer manuring apparatus or manure injector as claimed in claim 5 comprising a tank and an injection device, **characterized in that** the filter is arranged in the feed line of the tank.

7. Turf layer manuring apparatus or manure injector as claimed in claim 6, **characterized in that** the injection device comprises a channel provided with an outflow opening, wherein in the channel is arranged a valve which is adapted such that the outflow of liquid manure is only possible when the outflow opening is situated under the ground surface.

8. Turf layer manuring apparatus or manure injector as claimed in claim 7**, characterized in that** the valve is actuated by a body which rests on the ground surface and which holds the valve opened when the outflow opening is situated below the ground surface and which closes the valve when the outflow opening is situated above the ground surface, and that portion of the channel connecting onto the outflow opening is formed by a housing with a rectangular section and that the valve is arranged in a housing, wherein the valve is provided with an elongated portion which extends through the outflow opening and which is actuated by the body.

9. Turf layer manuring apparatus or manure injector as claimed in claim 8, **characterized in that** the body is a rolling body, that the rolling body is mounted height-adjustably in a frame and that a spring is arranged urging the rolling body downward relative to the frame.

10. Turf layer manuring apparatus or manure injector as claimed in claim 9, **characterized in that** a scraper is arranged on the rolling body.
